# EUROPEAN PATENT SPECIFICATION

(11) **EP 1 097 337 B1**
(45) Date of publication and mention of the grant of the patent: **17.09.2003**
(21) Application number: 99934754.5
(22) Date of filing: 12.07.1999
(51) Int. Cl.: F16L 59/02

(54) **APPARATUS FOR THE WINDING OF INSULATING CHUTES FROM MINERAL WOOL MAT**
VORRICHTUNG ZUM AUFWICKELN VON ISOLIERMATERIALBAHNEN AUS MINERALWOLLMATTEN
APPAREIL PERMETTANT D'ENROULER DES SECTIONS D'ISOLATION A PARTIR D'UN MATERIAU DE LAINE D'ISOLATION

(30) Priority: 10.07.1998 FI 981587
(43) Date of publication of application: 09.05.2001
(73) Proprietor: Paroc Group Oy Ab, 01300 Vantaa (FI)
(72) Inventor: SOIKKELI, Osmo, FIN-53650 Lappeenranta (FI)
(74) Representative: Haimelin, Jukka Ilmari
(86) International application number: FI9900610
(87) International publication number: WO00003174

(56) References cited:
- WO-A1-89/07733
- WO-A1-89/12776
- DE-A1- 1 525 860
- DE-A1- 1 646 442

## Description

The present invention refers to an apparatus for winding an insulation sections from a mineral wool web. In this type of apparatus the insulation sections are made to a given length and to a given inner diameter, thus being primarily suited for installation as insulation on piping of a given dimension. Insulation sections are as known manufactured from a mineral wool web by winding the mineral wool around a mandrel and then curing the binding agent impregnated into the mineral wool web as the insulation section blank is still resting wound about the mandrel. Next, the insulation section is covered by a suitable sheath material to give the section a moisture barrier and/or mechanical protection, whereafter the insulation section is removed from the mandrel and cut to length. The sections are further split in a conventional way by a longitudinal slit to enable their mounting at the installation site on the piping to be insulated.

Continuously operating apparatuses have been developed for the above-described process, one of which is described in Int. Pat. Appl. No. WO 89/07733. This apparatus embodiment has a loop track acting as collective conveyor means transporting the mandrels via different sections of the apparatus, which sections are: a winding device, a curing device, a coating device, a mandrel removal device, a cutting device and a slitter device. In said apparatus the winding of the insulation section is carried out by means of a winding belt moving along an endless-loop track, which winding belt can be compressed to enclose essentially the entire mandrel brought to the winding station. The mandrel is mounted so as to be freely rotating in the winding station and it is driven by means of the winding belt pressing against the mandrel surface with a given force. The mineral wool is passed as a web essentially as wide as the length of the mandrel into the nip formed by the winding belt and the mandrel, and further around the mandrel onto which it is wound under the compression of the winding belt. The wall thickness of an insulation section is determined by the amount of mineral wool passed to each winding step. A detailed description of the corresponding construction and function of a winding device according to the state of the art is also disclosed in Int. Pat. Appl. WO 89/12776.

In the winding devices disclosed in these publications, the drive of the winding belt is accomplished by means of rolls guiding the travel of the belt, whereby at least one of the rolls is a driving roll. Known embodiments are characterized by having the driving roll or rolls mounted immediately after the winding step in the running direction of the winding belt. This arrangement causes a problem in the control of the compressive effect, exerted by the winding belt on the mineral wool web, wound around the mandrel during winding. The driving roll imposes a pulling action on the winding belt, which pulling must overcome the resistances caused by all guide rolls and the winding operation itself. Hence, the winding belt must have a given minimum tension during the winding operation, which cannot be undercut in order to have the apparatus running at all. This tension thus sets a lower limit for the belt tension adjustment, which is conventionally adapted on the path of the belt travel.

The mineral wool to be wound has a structure which is easily compressible, whereby under certain conditions there may occur a situation, in which already the minimum tension of the winding belt during the winding step imposes a compressive pressure, which is unnecessarily high for the product to be manufactured. Furthermore, the control of belt tension tends to be inaccurate although the apparatus is operating at compressive pressures falling within the control range of the winding belt tension.

Another known arrangement for adjusting the density of the wall material in insulation sections is disclosed in SE laid-open publication 6401242-0. This embodiment is based on a compression roll parallel to the mandrel serving to press the mineral wool against the mandrel during the winding step. This kind of compressive force applied tangentially over the outer perimeter of the insulation section wall by a mating concave loading surface is not necessarily an optimal solution to the formation of the section wall structure. In the two apparatus constructions disclosed in the publication, the control of the compressive load is carried out either by using extremely complicated equipment structures or in a more simplified form by means of arrangements compromising the accuracy of equipment operation.

The present invention is based on a winding technique the basic embodiment of which is described in the above-cited publication WO 89/12776, i.e. the winding procedure is controlled by means of a winding belt that is guidedly passed around a mandrel and is driven by at least one of its guide rolls. It is an object of the present invention to improve the control of the compressive force and facilitate an accurate control thereof, whereby the present invention is characterized by applying the driving force to the winding belt immediately before the winding step.

The means transfering driving force to the winding belt can be the guide roll preceding the winding step.

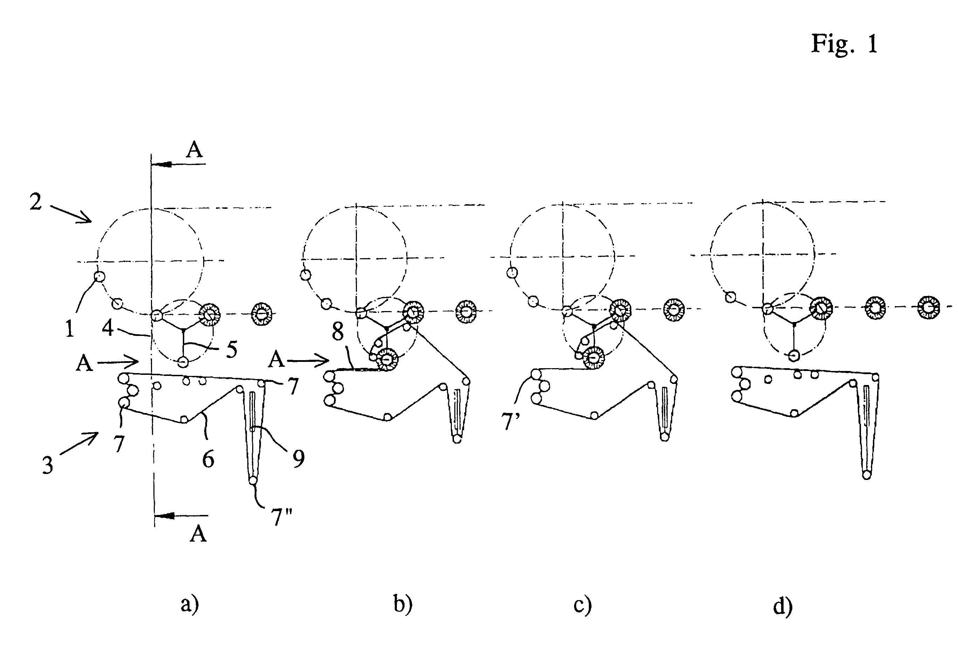

In the following, the invention will be described in greater detail with reference to the appended drawing in which
Figure 1 shows schematically a portion of the overall configuration of an apparatus for the manufacture of insulation sections, as well as a winding device in different operational phases thereof.

Referring to the apparatus in Fig. 1, there is shown a basic section, namely, the conveyor 2 of an apparatus used for the manufacture of insulation sections, said conveyor serving to transport the mandrels 1 along a loop track in a transverse position, spaced at a distance from each other. Along this track is disposed a winding device 3. In the disclosed embodiment, the winding section comprises three stations: a receiving station, a winding station proper and a delivery station. During the operation of the apparatus, there may simultaneously be a mandrel in each of these stations. By this arrangement the operation the station can be hurried up firstly through eliminating the need for moving the mandrels along reciprocating paths. Secondly, the apparatus enables an operation, according to which the conveyor track 2 can move forward by one mandrel spacing during the winding of a mandrel. The apparatus enables a mandrel to be returned one step forward on the transport track in regard to its original picking point.

The basic units of the winding station 3 are formed by cradle structures 4 supporting the mandrels in the three different positions described above, said support cradle structures being adapted to both sides of the conveyor track 2. The support cradles are mounted to the ends of a shaft extending transversally over the web and they carry support brackets in a star configuration, the tips of which are provided with conventional gripper and support means for grabbing the mandrels and supporting the same. Carried by these support brackets, the mandrels are freely rotating at least in the winding station. Close to the cradle structures 4, opposite to the conveyor track 2, there is mounted a winding belt 6 and its control and drive roll set, said control and drive system comprising a plurality of rolls 7. The rolls 7 are placed supported by their own support and transfer means. These means are known in the art, and their disclosed embodiment has not been described in detail. These drive and control means guide the winding belt 6 around the mandrel 1 located in the winding station in the manner shown in steps a) - d) of Fig. 1.

The mineral wool web 8 to be wound around the mandrel 1 is brought onto the winding belt in the direction of arrow A from a preceding conveyor track, not shown in Fig. 1. The mineral wool web is cut on the preceding conveyor track to a proper length taking into account the size, the wall thickness and desired density of the wall of the insulation section to be wound, as well as the surface square weight of the mineral wool web.

According to the invention, the drive of the winding belt is achieved by delivering a driving force to the belt by a roll 7' mounted upstream next to the mandrel in the winding station. Obviously, the driving force can be transmitted via one or two other rolls 7 preceding said roll 7' closest upstream to the mandrel, or alternatively, via any other generally known band driving means located in the corresponding site of the winding band 6. The essential requirement herein is the location of the driving force application. This arrangement offers optimal conditions in the apparatus for controlling the compressive force that the winding belt 6 imposes on the mandrel 1 during the winding step. Thus, the belt approaching the winding step performed around a mandrel 1 is free from braking effects caused by previous steps of the track, so the control of belt tension can be performed solely taking into account the actual belt tension prevailing in the belt when it leaves the surface of the insulation section to be wound.

For this belt tension control e.g., a roll 7" can be used, which is provided with a suitable drive machinery 9 affecting the extension of the winding belt travel. This drive machinery is well known in the art and can for instance be based on a controllably operating pneumatic actuator.

The present apparatus enables the manucature of insulation sections from a mineral wool web with extact outer diameter dimensions and, particularly, with a very exactly controlled compressive force of the winding step, thus providing an accurately controllable density of the insulation section.

## Claims

1. Apparatus for winding an insulation section from a mineral wool web (8) around a mandrel (1), said apparatus comprising a winding station (3) and means (4,5) for supporting the mandrel (1) in the winding station (3) freely rotating around its axis, and a winding belt (6) running in an endless loop, said belt (6) being pressable, by means of a plurality of guide rolls (7) parallel to the mandrel (1) in the winding stations (3) to essentially entirely enclose the mandrel (1), whereby said belt (6) receiving a driving force rotates said mandrel (1) by pressing its perimeter with a given pressure, and means for guiding the mineral wool as a web essentially as wide as the length of the mandrel (1) into the nip formed by the winding belt (6) and the mandrel (1) and further around the mandrel (1) under the compression of the winding belt (6), **characterized in that** the driving force to the belt (6) is arranged to be transfered immediately before the winding step.

2. Apparatus according to claim 1, **characterized in that** the transmission of the driving force to the winding belt (6) is arranged to be tranfered via a guide roll (7') mounted upstream next to the winding step in the running direction of the belt (6).

3. Apparatus according to claim 1 or 2, **characterized in that** the endless loop track of the winding belt (6) is provided with control means (7",9) for the belt tension.

## Patentansprüche

1. Vorrichtung zum Aufwickeln eines Isolierrohres aus einer Mineralwollbahn (8) um einen Wickeldorn (1), welche Vorrichtung eine Wickelstation (3) und Mittel (4,5) zum Stützen des auf der Wickelstation (3) frei um seine Achse rotierenden Wickeldorns (1) sowie ein als eine endlose Kreisbahn umlaufendes Wickelband (6) umfasst, welches Wickelband mittels mehrerer, parallel zu dem Wickeldorn (1) verlaufender Leitrollen (7) aufder Wickelstation (3) derart pressbar ist, dass dieses den Wickeldorn (1) im wesentlichen ganz umschließt, wobei das durch eine Antriebskraft angetriebene Band (6) den Wickeldorn (1) durch Pressen seines Umfangs mit einem vorgegebenen Druck dreht, sowie Mittel zur Zuführung der Mineralwolle als eine Bahn, deren Breite im wesentlichen der Länge des Wickeldorns (1) entspricht, in einen von dem Wickelband (6) und dem Wickeldorn (1) gebildeten Spalt und weiter unter Druck des Wickelbandes (6) um den Wickeldorn (1), **dadurch gekennzeichnet, dass** die Antriebskraft unmittelbar vor dem Wickelvorgang auf das Band (6) übertragen wird.

2. Vorrichtung gemäß Anspruch 1, **dadurch gekennzeichnet, dass** die Übertragung der Antriebskraft auf das Wickelband (6) durch eine in der Laufrichtung des Bandes (6) unmittelbar vor dem Wickelvorgang angeordnete Leitrolle (7') erfolgt.

3. Vorrichtung gemäß Anspruch 1 oder 2, **dadurch gekennzeichnet, dass** auf der endlosen Kreisbahn des Wickelbandes (6) Steuerelemente (7", 9) zur Steuerung der Bandspannung vorgesehen sind.

## Revendications

1. Appareil pour enrouler une section d'isolation à partir d'une bobine de laine minérale (8) autour d'un mandrin (1), ledit appareil comprenant un poste d'enroulement (3) et les moyens (4, 5) pour supporter le mandrin (1) dans le poste d'enroulement (3) tournant librement autour de son axe, et une courroie d'enroulement (6) fonctionnant dans une boucle sans fin, ladite courroie (6) que l'on peut presser, au moyen d'une pluralité de rouleaux guides (7) parallèles au mandrin (1) dans le poste d'enroulement (3) pour renfermer essentiellement complètement le mandrin (1), moyennant quoi ladite courroie (6) recevant une énergie motrice fait tourner ledit mandrin (1) en appuyant sur son périmètre avec une pression donnée, et le moyen de guider la laine minérale comme une bobine essentiellement aussi large que la longueur du mandrin (1) dans la bande formée par la courroie d'enroulement (6) et le mandrin (1), et en outre autour du mandrin (6) sous la compression de la courroie d'enroulement (6), **caractérisé en ce que** l'énergie motrice jusqu'à la courroie (6) est agencée pour être transférée immédiatement avant l'étape d'enroulement.

2. Appareil selon la revendication 1, **caractérisé en ce que** la transmission de l'énergie motrice jusqu'à la courroie d'enroulement (6) est agencée pour être transférée via un rouleau guide (7') monté en amont près de l'étape d'enroulement dans le sens de fonctionnement de la courroie (6).

3. Appareil selon la revendication 1 ou 2, **caractérisé en ce que** boucle de retour sans fin de la courroie d'enroulement (6) est munie de moyens de commande (7'', 9) pour la tension de courroie.
